# EUROPEAN PATENT SPECIFICATION

(11) **EP 0 850 152 B1**
(45) Date of publication and mention of the grant of the patent: **10.11.1999**
(21) Application number: 96927780.5
(22) Date of filing: 14.08.1996
(51) Int. Cl.: B60J 10/08, B60J 10/00

(54) **COMPRESSION SEALS**
DRUCKABDICHTUNG
JOINT A COMPRESSION

(30) Priority: 14.09.1995 GB 9518815
(43) Date of publication of application: 01.07.1998
(73) Proprietor: DRAFTEX INDUSTRIES LIMITED, Edinburgh EH2 3AP, Scotland (GB)
(72) Inventor: SANS, Philippe, F-28110 Luce (FR)
(74) Representative: Foster, David Martyn
(86) International application number: GB9601983
(87) International publication number: WO9710113

(56) References cited:
- EP-A- 0 613 800
- FR-A- 2 566 723
- GB-A- 1 240 441
- GB-A- 2 183 707

## Description

The invention relates to a closure arrangement, comprising a frame defining an edge of an opening, a closure member movably mounted relative to the opening so as to be movable in a part-sideways direction towards and away from a closure position in relation to the opening, and a sealing arrangement mounted to provide a seal between the edge of the opening and the closure member when the closure member is in the closure position, the sealing arrangement comprising longitudinally extending mounting means secured so as to be adjacent to the edge of the opening at least when the closure member is in the closure position, a longitudinally extending sealing member, and connection means attaching the sealing member to the mounting means so that the sealing member is between the closure member and the edge when the closure member is in the closure position, the connection means allowing the sealing member to move relative to the mounting means in response to contact applied to the sealing member when the closure member moves into the closure position so as to provide a seal between the closure member and the edge of the opening in the closure position, the sealing member being relatively harder than the connection means

Such an arrangement is shown in GB-A-2 183 707. In this arrangment, the sealing member is tubular in cross-section and runs along the outside of a side wall of a channel-shaped mounting means which is arranged to be mounted on the edge of a door opening. Part of the tubular wall of the sealing member furthest from the mounting means, and being the part which is contacted by the closing door, is of solid or unfoamed extruded material, and the remainder of the tubular wall is of sponge or cellular form. In this known arrangement, contact of the sealing member by the closing door is accommodated at least in part by flexing of the tubular wall and, in particular, by compressive flexing of the part thereof which is of sponge or cellular form. The more the latter material flexes, in response to the contact, the greater is the reactive force produced by the material on the closing door. The increased reaction can interfere with easy closing of the door. The invention aims to deal with this problem.

FR-A-2 566 723 shows an arrangement in which a sealing member is supported from mounting means by a short link of flexible material which in turn supports an arm of harder material carrying, at its extremity, a lip of softer material. The closing closure member contacts the soft lip causing the relatively hard arm to pivot by means of the soft flexible link, the sealing function being carried out by the compression of the soft lip caused by the closing closure member. The more the soft material of this lip flexes, in response to such compression, the greater is the reactive force produced by the material on the closing closure member.

GB-A-2 240 441 shows a weatherstrip for wiping against a slidable window glass such as in a motor vehicle body. The weather strip has a relatively hard wiping member attached to a mounting means adjacent the moving window glass by means of resilient PVC material which holds the rigid wiping member against the slidable window glass.

According to the invention, therefore, the known sealing arrangement is characterised in that the connection means comprises material forming a hinge whereby the reactive force exerted by the sealing member on the closing closure member is substantially constant as the closure member closes.

Sealing arrangements embodying the invention, and for sealing around doors and similar openings in motor vehicle bodies will not be described, by way of example only, with reference to the accompanying diagrammatic drawings in which:
Figure 1 is a perspective view of a known form of door seal;
Figure 2 is a cross-section of the door seal of Figure 1, but showing it in operation;
Figure 3 is a cross-sectional view corresponding to Figure 2 but showing one of the door seals embodying the invention;
Figure 4 shows the seal of Figure 3 in operation;
Figure 5 is a graph for explaining the operation of the door seal of Figures 3 and 4;
Figure 6 is a cross-section through another of the door seals embodying the invention;
Figure 7 shows the door seal of Figure 6 in operation; and
Figure 8 is a cross-section through a further one of the door seals embodying the invention.

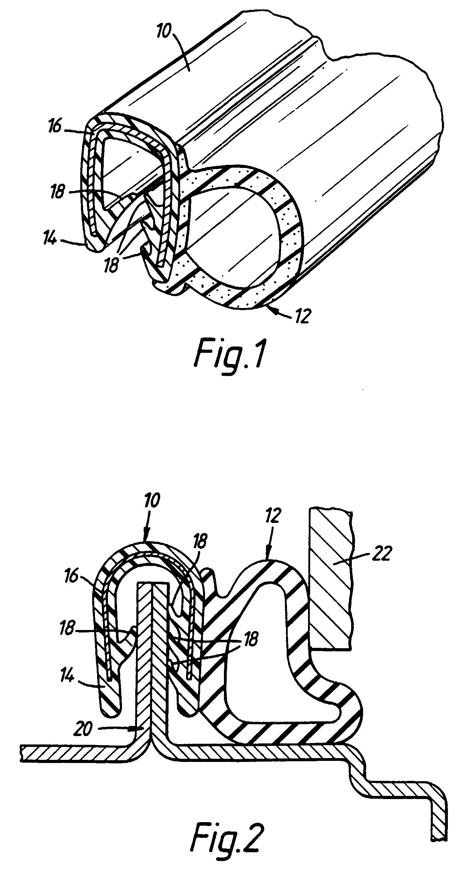

The known door seal of Figure 1 comprises a channel-shaped gripping section 10 and a sealing section 12 which, in the form shown in Figure 1, is of hollow tubular form.

The gripping section 10 comprises extruded flexible material 14, such as plastics or rubber material, in which is embedded a reinforcing metal carrier 16.

The metal carrier 16 may be of any suitable form. For example, it may comprise U-shaped elements arranged together to form a channel extending along the gripping section and joined together by short flexible integral connecting links or perhaps disconnected from each other. Instead, the carrier could be made of channel-shaped metal with slits or slots formed through it to increase its flexibility. In another form, the carrier comprises wire looped to and fro along the length of the channel. Other forms of carrier are possible.

The carrier 16 can be incorporated into the extruded material 14 using a known co-extrusion process.

As shown in Figure 1, the extruded material 14 provides integral gripping lips 18 which extend inwardly of the channel from the opposite inside side walls.

The gripping lips 18 may be extruded to have the same or a different hardness from the channel-shaped material 14; it may be advantageous for the gripping lips 18 to be made of softer material.

The sealing section 12 is in the form of a hollow tube made of soft flexible material, such as cellular or foamed rubber for example. It may be formed separately from the extruded material 14 and adhesively or otherwise secured to the gripping section afterwards. Instead it may be co-extruded with the material 14.

Figure 2 shows how the seal of Figure 1 is mounted to extend around a door opening in a motor vehicle body The door opening is defined by a flange 20 where the inner and outer body panels of the vehicle come together at the door opening and are welded together. The flange 20 lies in the general plane of the opening and the gripping section 10 is mounted on it, as illustrated. The gripping lips 18 make frictional contact with the sides of the flange and firmly secure the gripping section 10 in position.

In this way, the sealing section 12 is mounted to extend around the door opening on the outwardly directed face of the flange 20. Thus, when the door 22 closes, it compresses the sealing section 12 and forms a seal against air, dust, moisture and sound.

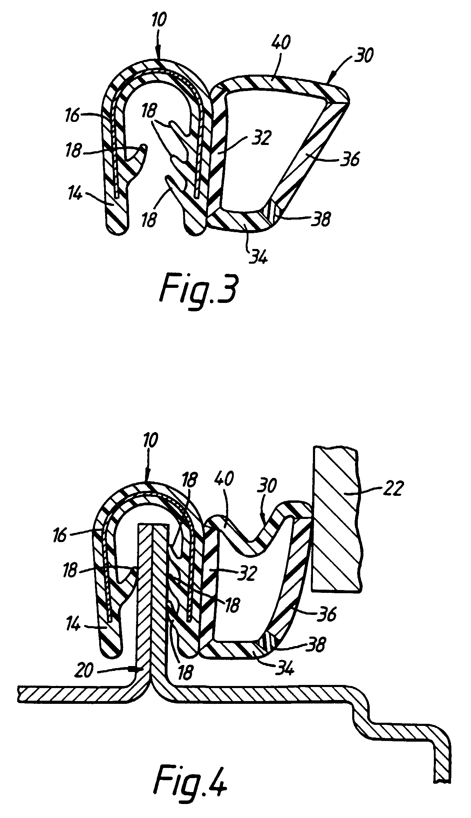

The seal shown in Figure 3, and embodying the invention, has a gripping section 10 which may be of the same form as shown in Figures 1 and 2. The gripping section 10 in Figure 3 carries a sealing section 30. The sealing section 30 comprises a wall part 32 which is mounted on the outside face of one of the side walls of the gripping section 10 and which has a foot portion 34. A wall 36 of relatively rigid material is integrally connected to the foot 34 by means of a short section of flexible material 38.

Finally, the distal end of the wall 36 is integrally connected to the corresponding end of the wall part 32 by a flexible wall portion 40.

The wall part 32, the foot 34, the hinge 38, the wall 36 and the flexible wall portion 40 may be integrally extruded as a whole, using a suitable multiple extrusion process to ensure the correct hardness for each part. The sealing section may be extruded from any suitable material such as plastics or rubber material.

Figure 4 shows the seal of Figure 3 in use, and corresponds to Figure 2. Thus, Figure 4 shows the seal mounted to run around the door opening and the closing door 22. As shown in Figure 4, the closing door contacts the wall 36 which thus hinges on the hinge 38, the flexible wall portion 40 bending accordingly.

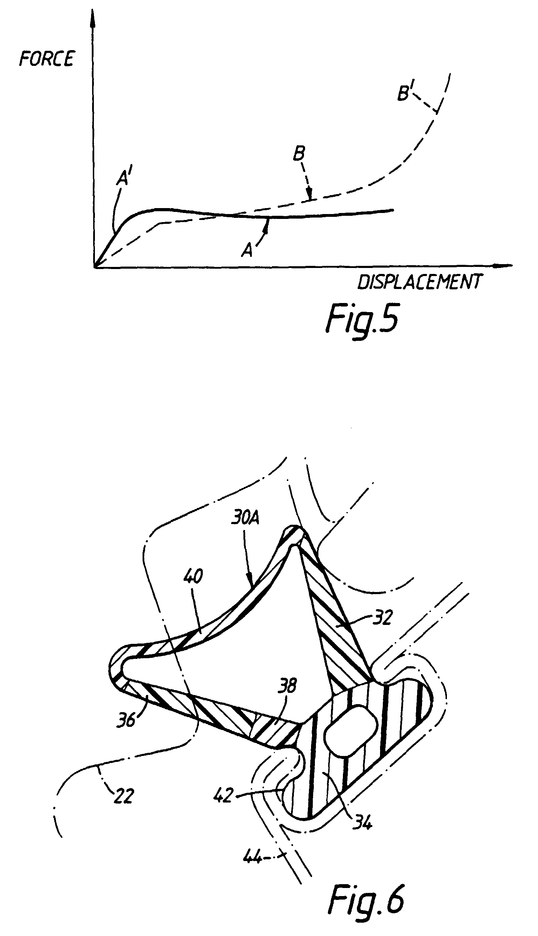

Curve A in Figure 5 shows the relationship between the reactive force applied by the wall 36 (Figures 3 and 4) to the closing door 22 and the displacement of the wall (and the door). As shown, the reactive force is substantially constant over a wide range of displacement, after the initial contact shown at region A¹.

By way of comparison, curve B in Figure 5 shows the corresponding relationship between reactive force and displacement for a seal of the known type as shown in Figures 1 and 2. As illustrated, the reactive force continues to increase as the sealing section 12 is compressed, and then rises very rapidly over a region B¹; the region B¹ corresponds to the situation when the sealing section 12 has become substantially collapsed so that the opposite walls of the tube come into contact with each other.

The curve A of Figure 5 shows that the seal 30 of Figures 3 and 4 is advantageous in that the reactive force produced by the sealing section is substantially constant. This ensures that the sealing section 30 produces a good sealing effect without producing a high resistance to closure of the door.

The flexible wall portion 40 of the seal 30 produces substantially no resistance to the compression of the sealing section 30 and is primarily provided in order to close off the hollow interior.

Figures 3 and 4 show only one of many forms which the sealing section 30 can take.

Figure 6 shows a modified form 30A of the sealing section 30. Parts in Figure 6 corresponding to those in Figures 3 and 4 are correspondingly referenced.

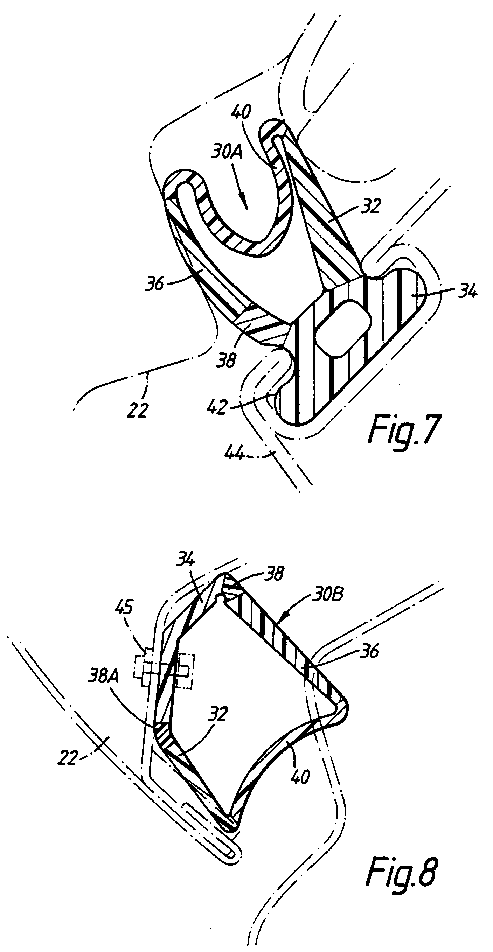

The sealing section 30A of Figure 6 is not mounted on a gripping section (such as the gripping section 10 of Figures 3 and 4). Instead, the foot portion 34 is mounted in a channel 42 which is formed in the body panel 44 around the edge of the door opening. Figure 7 shows how the sealing section 30A reacts to the closing door 22. In the same manner as illustrated in Figure 4, the wall 36 hinges on the hinge 38, in response to the closing door, and the flexible wall portion 40 flexes accordingly. The wall 32 remains stationary (against the door frame).

The relationship between the reactive force produced by the sealing section 30A of Figures 6 and 7 and its displacement corresponds to that shown in curve A of Figure 5.

Figure 8 shows another sealing section 30B embodying the invention. Again, parts corresponding to those in Figures 3 and 4 are similarly referenced.

Sealing section 30B is in this case attached to the edge of the door 22. As shown, it is attached by means of fixtures (of which one, referenced 45, is illustrated) which fasten the foot 34 of the sealing section to one of the door panels 46.

In the case of the sealing section 30B, there are two hinges, 38 and 38A. Hinge 38 hinges the wall 36 to the foot 34, and hinge 38A hinges the wall 32 to the foot. During initial mounting of the sealing section 30B, the wall 32 will hinge slightly on the hinge 38A, until arrested by the flange 50 at the edge of the door.

Figure 8 shows the adjacent part of the door frame 48. When the closing door 22, carrying the sealing section 30B, moves towards the frame 38, wall 36 hinges on the hinge 38, in the manner already explained in connection with the other Figures. As before, the flexible wall 40 flexes to accommodate the hingeing of the wall 36.

Again, the reactive force produced by the sealing section 30B follows the curve A shown in Figure 5.

## Claims

1. A closure arrangement, comprising a frame defining an edge (20) of an opening, a closure member (22) movably mounted relative to the opening so as to be movable in a part-sideways direction towards and away from a closure position in relation to the opening, and a sealing arrangement (10,30) mounted to provide a seal between the edge (20) of the opening and the closure member (22) when the closure member is in the closure position, the sealing arrangement comprising longitudinally extending mounting means (34) secured so as to be adjacent to the edge (20) of the opening at least when the closure member (22) is in the closure position, a longitudinally extending sealing member (36), and connection means (38) attaching the sealing member (36) to the mounting means (34) so that the sealing member (36) is between the closure member (22) and the edge (20) when the closure member (22) is in the closure position, the connection means (38) allowing the sealing member (36) to move relative to the mounting means (34) in response to contact applied to the sealing member (36) when the closure member (22) moves into the closure position so as to provide a seal between the closure member (22) and the edge (20) of the opening in the closure position, the sealing member (36) being relatively harder than the connection means (38), characterised in that the connection means (38) comprises material forming a hinge whereby the reactive force exerted by the sealing member (36) on the closing closure member (22) is substantially constant as the closure member (22) closes.

2. An arrangement according to claim 1, characterised in that the sealing member (36) is part of the wall of a longitudinally extending hollow chamber (30), the hinge (38) extending along a first one of the longitudinal edges of the sealing member (36) and the wall of the hollow chamber including a flexible wall portion (40) attached to the second one of the longitudinally extending edges of the sealing member (36).

3. An arrangement according to claim 2, characterised in that the wall of the hollow chamber (30) includes a substantially rigid wall member (32) attached to the mounting means (34) and spaced by the mounting means (34) from the sealing member (36).

4. An arrangement according to claim 3, characterised in that the relatively rigid wall member (32) is attached to the mounting member (34) by a further hinge (38A).

5. An arrangement according to claim 3 or 4, characterised in that the second longitudinally extending edge of the sealing member (36) is connected to a longitudinally extending edge of the relatively rigid wall member (32) by the flexible wall portion (40).

6. An arrangement according to any one of claims 2 to 5, characterised in that it is co-extruded as an integral whole.

7. An arrangement according to any preceding claim, characterised by fixing means (10) fixing the mounting means (34) to the edge (20) of the opening.

8. An arrangement according to any one of claims 1 to 6, characterised by fixing means (45) fixing the mounting means (34) to the closure member (22).

9. An arrangement according to claim 7 or 8, characterised in that the fixing means comprises a channel-shaped gripping member (10) to the outside wall of which is attached the mounting means (34), and in that the gripping member (10) embracingly grips a flange (20).

## Patentansprüche

1. Verschlußanordnung mit einem eine Kante (20) einer Öffnung bildenden Rahmen, einem so relativ zu der Öffnung bewegbar angeordneten Verschlußmittel (22), daß dieses in Bezug zu der Öffnung in teilweise seitlicher Richtung hin zu einer Verschlußstellung und fort von einer Verschlußstellung bewegbar ist, und mit einer Dichtungsanordnung (10, 30), die angeordnet ist, um für eine Abdichtung zwischen der Kante (20) der Öffnung und dem Verschlußmittel (22) zu sorgen, wenn das Verschlußmittel sich in der Verschlußstellung befindet, wobei die Dichtungsanordnung sich längserstreckende Befestigungsmittel (34), die befestigt sind, um wenigstens dann in der Nähe der Kante (24) der Öffnung zu sein, wenn das Verschlußmittel (22) sich in der Verschlußstellung befindet, sowie ein sich längserstreckendes Dichtungsteil (36) und ein Verbindungsteil (38) umfaßt, der das Dichtungsteil (36) an dem Befestigungsmittel (34) befestigt, so daß das Dichtungsmittel (36) zwischen dem Verschlußmittel (22) und der Kante (20) angeordnet ist, wenn sich das Verschlußmittel (22) in der Verschlußstellung befindet, wobei das Verbindungsmittel (38) es dem Dichtungsmittel ermöglicht, sich als Anwort auf den auf das Dichtungsteil (36) aufgebrachten Kontakt relativ zu dem Befestigungsmittel (34) zu bewegen, wenn sich das Verschlußmittel (22) in die Verschlußstellung bewegt, um in der Verschlußstellung für eine Abdichtung zwischen dem Verschlußmittel (22) und der Kante (20) der Öffnung zu sorgen, wobei das Dichtungsteil (36) verhältnismäßig härter ist, als das Verbindungsteil (38),
**dadurch gekennzeichnet,**
daß das Verbindungsmittel (38) ein ein Gelenk bildendes Material umfaßt, wodurch die durch das Dichtungsteil (36) auf das sich schließende Verschlußmittel (22) ausgeübte Gegenkraft während des Schließens des Verschlußmittels (22) im wesentlichen konstant ist.

2. Anordnung nach Anspruch 1, dadurch gekennzeichnet, daß das Dichtungsteil (36) ein Teil der Wand einer sich längserstreckenden Hohlkammer (30) ist und das Gelenk (38) sich entlang einer ersten Längskante des Dichtungsteils (36) erstreckt, sowie die Wand der Hohlkammer einen flexiblen Wandbereich beinhaltet, der an die zweite sich längserstreckende Kante des Dichtungsteil (36) angeschlossen ist.

3. Anordnung nach Anspruch 2, dadurch gekennzeichnet, daß die Wand der Hohlkammer (30) ein im wesentlichen steifes Wandteil (32) beinhaltet, das an das Befestigungsmittel (34) angefügt ist und durch das Befestigungsmittel (34) von dem Dichtungsteil (36) beabstandet ist.

4. Anordnung nach Anspruch 3, dadurch gekennzeichnet, daß das relativ steife Wandteil (32) über ein weiteres Gelenk (38 A) an das Befestigungsmittel (34) angeschlossen ist.

5. Anordnung nach Anspruch 3 oder 4, dadurch gekennzeichnet, daß die zweite sich längserstreckende Kante des Dichtungsteils (36) über den flexiblen Wandbereich (40) mit einer sich längserstreckenden Kante des relativ steifen Wandteils (32) verbunden ist.

6. Anordnung nach einem der Ansprüche 2 bis 5, dadurch gekennzeichnet, daß diese gleichzeitig als einstückiges Ganzes extrudiert ist.

7. Anordnung nach einem der vorhergehenden Ansprüche, gekennzeichnet durch ein Haltemittel (10), daß das Befestigungsmittel (34) an der Kante (20) der Öffnung fixiert.

8. Anordnung nach einem der Ansprüche 1 bis 6, gekennzeichnet durch ein Haltemittel (45), das das Befestigungsmittel (34) an dem Verschlußmittel (22) fixiert.

9. Anordnung nach Anspruch 7 oder 8, dadurch gekennzeichnet, daß das Haltemittel zu der Außenwand hin, an der das Befestigungsmittel (34) angefügt ist ein kanalförmiges Klemmteil (10) aufweist, und daß das Klemmteil (10) klemmend einen Flansch (20) umfaßt.

## Revendications

1. Agencement de fermeture, comportant un cadre définissant un bord (20) d'une ouverture, un élément de fermeture (22) monté de façon mobile par rapport à l'ouverture de façon à être mobile dans une direction partiellement latérale vers et à l'écart d'une position de fermeture par rapport à l'ouverture, et un agencement d'étanchéité (10, 30) monté afin d'assurer une étanchéité entre le bord (20) de l'ouverture et l'élément de fermeture (22) lorsque l'élément de fermeture est dans la position de fermeture, l'agencement d'étanchéité comportant des moyens de montage s'étendant longitudinalement (34) fixés de façon à être adjacents au bord (20) de l'ouverture au moins lorsque l'élément de fermeture (22) est dans la position de fermeture, un élément d'étanchéité s'étendant longitudinalement (36), et des moyens de raccordement (38) fixant l'élément d'étanchéité (36) sur les moyens de montage (34) de telle sorte que l'élément d'étanchéité (36) est entre l'élément de fermeture (22) et le bord (20) lorsque l'élément de fermeture (22) est dans la position de fermeture, les moyens de raccordement (38) permettant à l'élément d'étanchéité (36) de se déplacer par rapport aux moyens de montage (34) en réponse au contact appliqué sur l'élément d'étanchéité (36) lorsque l'élément de fermeture (22) se déplace dans la position de fermeture de façon à assurer une étanchéité entre l'élément de fermeture (22) et le bord (20) de l'ouverture dans la position de fermeture, l'élément d'étanchéité (36) étant relativement plus dur que les moyens de raccordement (38), caractérisé en ce que les moyens de raccordement (38) comportent une matière formant une charnière de sorte que la force de réaction exercée par l'élément d'étanchéité (36) sur l'élément de fermeture (22) est sensiblement constante lorsque l'élément de fermeture (22) se ferme.

2. Agencement selon la revendication 1, caractérisé en ce que l'élément d'étanchéité (36) est une partie de la paroi d'une chambre creuse s'étendant longitudinalement (30), la charnière (38) s'étendant le long d'un premier des bords longitudinaux de l'élément d'étanchéité (36), et la paroi de la chambre creuse comprenant une partie de paroi flexible (40) fixée sur le deuxième des bords s'étendant longitudinalement de l'élément d'étanchéité (36).

3. Agencement selon la revendication 2, caractérisé en ce que la paroi de la chambre creuse (30) comprend un élément de paroi sensiblement rigide (32) fixé sur les moyens de montage (34) et espacé par les moyens de montage (34) de l'élément d'étanchéité (36).

4. Agencement selon la revendication 3, caractérisé en ce que l'élément de paroi relativement rigide (32) est fixé sur l'élément de montage (34) par une autre charnière (38A).

5. Agencement selon la revendication 3 ou 4, caractérisé en ce que le deuxième bord s'étendant longitudinalement de l'élément d'étanchéité (36) est relié à un bord s'étendant longitudinalement de l'élément de paroi relativement rigide (32) par la partie de paroi flexible (40).

6. Agencement selon l'une quelconque des revendications 2 à 5, caractérisé en ce qu'il est coextrudé de manière intégrale.

7. Agencement selon l'une quelconque des revendications précédentes, caractérisé par des moyens de fixation (10) qui fixent les moyens de montage (34) sur le bord (20) de l'ouverture.

8. Agencement selon l'une quelconque des revendications 1 à 6, caractérisé par des moyens de fixation (45) qui fixent les moyens de montage (34) sur l'élément de fermeture (22).

9. Agencement selon la revendication 7 ou 8, caractérisé en ce que les moyens de fixation comportent un élément d'accrochage en forme de canal (10) sur la paroi extérieure duquel sont fixés les moyens de montage (34), et en ce que l'élément d'accrochage (10) s'accroche sur un rebord (20).
